# Europäisches Patentamt
## European Patent Office
### Office européen des brevets

(11) Veröffentlichungsnummer: **0 232 821**
**A2**

(12) # EUROPÄISCHE PATENTANMELDUNG

(21) Anmeldenummer: **87101338.9**

(22) Anmeldetag: **31.01.87**

(51) Int. Cl.⁴: **F 16 H 3/44**

(30) Priorität: **04.02.86 US 826164**

(43) Veröffentlichungstag der Anmeldung: **19.08.87**
**Patentblatt 87/34**

(84) Benannte Vertragsstaaten: **AT DE ES FR GB IT**

(71) Anmelder: **DEERE & COMPANY, 1 John Deere Road, Moline Illinois 61265 (US)**

(72) Erfinder: **Marks, Jeffrey Carleton, 419 Park Lane, Waterloo Iowa 50702 (US)**

(74) Vertreter: **Feldmann, Bernhard, DEERE & COMPANY European Office, Patent Department Steubenstrasse 36-42 Postfach 503, D-6800 Mannheim 1 (DE)**

(54) **Umlaufräderwechselgetriebe mit einer Ringradwelle und einer Umlaufräderträgerwelle.**

(57) Umlaufräderwechselgetriebe mit einer Ringradwelle (10) und einer Umlaufräderträgerwelle (11), wobei ein Ringrad (12) mit der Ringradwelle (10) konzentrisch verbunden ist und mit einem ersten Satz Umlaufräder (14) in Eingriff steht, die auf einem mit der Umlaufräderträgerwelle (11) verbundenen Umlaufräderträger (18) drehbar angeordnet sind und mit einem feststellbaren ersten Sonnenrad (21) kämmen, und wobei ein zweites feststellbares mit einem zweiten Satz Umlaufräder (15) kämmendes Sonnenrad (22) vorgesehen ist, die beiden Sonnenräder (21, 22) miteinander kuppelbar sind, der zweite Satz Umlaufräder (15) mit dem Ringrad (12) kämmt und auf dem den ersten Satz Umlaufräder (14) aufnehmenden Umlaufräderträger (18) drehbar angeordnet ist.

Umlaufräderwechselgetriebe mit einer Ringradwelle und einer Umlaufräderträgerwelle

---

Die Erfindung bezieht sich auf ein Umlaufräderwechselgetriebe mit einer Ringradwelle und einer Umlaufräderträgerwelle, wobei ein Ringrad mit der Ringradwelle konzentrisch verbunden ist und mit einem ersten Satz Umlaufräder in Eingriff steht, die auf einem mit der Umlaufräderträgerwelle verbundenen Umlaufräderträger drehbar angeordnet sind und mit einem feststellbaren ersten Sonnenrad kämmen und wobei ein zweites feststellbares mit einem zweiten Satz Umlaufräder kämmendes Sonnenrad vorgesehen ist.

Mit diesem bekannten Umlaufräderwechselgetriebe (US-A-2 755 688) lassen sich zwei Vorwärtsgänge und ein Rückwärtsgang schalten, wozu drei Sätze Umlaufräder und drei Ringräder vorgesehen sind. Hierdurch entsteht eine weit auseinandergezogene Bauweise mit zahlreichen Zahnradsätzen, zu deren Herstellung ein erheblicher Aufwand erforderlich ist.

Die mit der Erfindung zu lösende Aufgabe wird darin gesehen, die Anzahl der Zahnrädergruppen zu verringern, um das Umlaufräderwechselgetriebe in einer gedrungenen Bauweise herstellen zu können. Diese Aufgabe ist nach der Erfindung dadurch gelöst worden, daß die beiden Sonnenräder miteinander kuppelbar sind und daß der zweite Satz Umlaufräder mit dem Ringrad kämmt und auf dem den ersten Satz Umlaufräder aufnehmenden Umlaufräderträger drehbar angeordnet ist. Auf diese Weise können drei Vorwärtsgänge bei Einsparung eines weiteren Ringrades und eines Umlaufräderträgers geschaltet werden, da durch das Festsetzen der beiden Sonnenräder ebenfalls wie beim gattungsmäßig berücksichtigten Stand der Technik zwei Vorwärtsgänge erzielbar sind und durch das miteinander Kuppeln der beiden Sonnenräder noch ein direkter Gang erzielbar ist.

Im einzelnen wird nach der Erfindung ferner vorgeschlagen, daß der zweite Satz Umlaufräder Zahnräder mit einem inneren Zahnkranz, der mit dem Ringrad kämmt, und mit einem äußeren Zahnkranz aufweist, der mit dem zweiten Sonnenrad kämmt, wobei beide Zahnkränze drehfest miteinander verbunden sind. Hierdurch ist bereits die Voraussetzung für eine gedrungene Bauweise gegeben, die im einzelnen nach der Erfindung dadurch erreicht wird, wenn der erste Satz Umlaufräder, das erste Sonnenrad und der innere Zahnkranz der Zahnräder des zweiten Satzes Umlaufräder in einer gemeinsamen Ebene angeordnet sind.

Um entsprechende Über- bzw. Untersetzungen zu erhalten, wird nach der Erfindung ferner vorgeschlagen, daß die Sonnenräder denselben Teilkreisdurchmesser und die inneren Zahnkränze einen kleineren Teilkreisdurchmesser als die äußeren Zahnkränze aufweisen.

Eine besonders zweckmäßige Anordnung läßt sich erfindungsgemäß dann erreichen, wenn das erste Sonnenrad mit einer konzentrisch zur Umlaufträgerwelle umlaufenden ersten Hohlwelle und das zweite Sonnenrad mit einer konzentrisch zur ersten Hohlwelle umlaufenden zweiten Hohlwelle fest verbunden ist, wobei beide Hohlwellen miteinander über eine Kupplung verbindbar und über je eine Bremse feststellbar sind. Hierdurch ergibt sich eine Bauweise, in der die Umlaufräderträgerwelle und die beiden Hohlwellen übereinander geschachtelt angeordnet sind. Hierbei kann selbstverständlich die Umlaufräderträgerwelle als Abtriebswelle aber auch als Antriebswelle dienen, je nachdem, ob die Ringradwelle angetrieben wird oder nicht.

Die gedrungene Bauweise wird nach der Erfindung dadurch abgerundet, daß der Umlaufräderträger einerseits der gemeinsamen Ebene und die Kupplung und die Bremsen andererseits der gemeinsamen Ebene angeordnet sind.

In der Zeichnung ist ein nachfolgend näher erläutertes Ausführungsbeispiel der Erfindung dargestellt. Es zeigt:

Fig. 1    ein Umlaufräderwechselgetriebe im Schnitt;

Fig. 2    einen Schnitt nach der Linie 2-2 in Fig. 1.

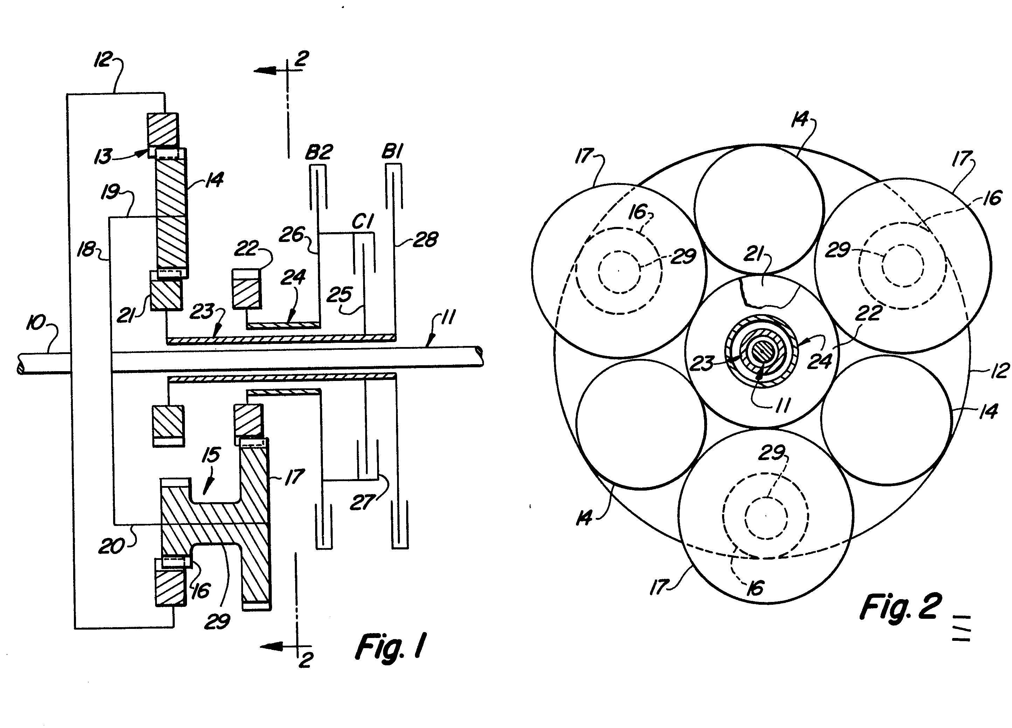

Bei dem in Fig. 1 dargestellten Umlaufräderwechselgetriebe sind Lagerstellen der besseren Übersicht wegen fortgelassen worden, da sie jedem Getriebefachmann geläufig sind. Mit 10 ist eine Ringradwelle und mit 11 ist eine Umlaufräderträgerwelle bezeichnet, wobei die Ringradwelle als Antriebswelle und die Umlaufräderträgerwelle als Abtriebswelle dienen kann. Es ist offensichtlich, daß bei jedem Getriebe die Antriebsverhältnisse umgekehrt werden können, so daß auch die Ringradwelle 10 als Abtriebswelle und die Umlaufräderträgerwelle 11 als Antriebswelle dienen kann.

Die Ringradwelle 10 ist mit einem Ringrad 12, das eine Innenverzahnung 13 aufweist, fest verbunden. Das Ringrad 12 ist konzentrisch zur Ringradwelle 10 angeordnet und drehfest mit dieser verbunden. Die Innenverzahnung 13 ist in ständigem Eingriff mit einem ersten Satz Umlaufräder 14, der Umlaufräder mit einem Zahnkranz aufweist, und mit einem zweiten Satz Umlaufräder 15, der Doppelzahnräder aufweist. Jedes Doppelzahnrad ist dabei mit einem inneren Zahnkranz 16 und mit einem äußeren Zahnkranz 17 versehen, die über einen Schaft 29 drehfest miteinander verbunden sind. Hierbei kann der Durchmesser der Umlaufräder in jedem Satz Umlaufräder variiert werden, um die entsprechenden Übersetzungsverhältnisse in dem Umlaufräderwechselgetriebe zu erhalten. Bei der vorliegenden Ausführung haben die Umlaufräder 15 des zweiten Satzes Zahnkränze 17, die einen größeren Durchmesser und eine größere Anzahl von Zähnen aufweisen als die Umlaufräder 14 des ersten Satzes Umlaufräder, die wiederum einen größeren Durchmesser und mehr Zähne als der innere Zahnkranz 16
der Umlaufräder 15 des zweiten Satzes aufweisen.

Beide Sätze Umlaufräder 14 und 15 sind an einem gemeinsamen
Umlaufräderträger 18 angeordnet, der konzentrisch und fest
mit der Umlaufräderträgerwelle 11 verbunden ist. Hierbei
weist der Umlaufräderträger Lagerwellen 19 und 20 auf, auf
denen der erste Satz Umlaufräder 14 bzw. der zweite Satz
Umlaufräder 15 drehbar angeordnet sind.

Von dem Ringrad 12 aus wird die Drehbewegung auf die Umlaufräderträgerwelle 11 entweder durch einen der beiden Sätze
Umlaufräder 14 und 15 oder durch beide übertragen. Die
Übertragung der Drehung durch die Sätze der Umlaufräder 14
und 15 wird bestimmt durch den Drehzustand von einem ersten
und einem zweiten Sonnenrad 21 und 22, über die sich, je
nachdem ob sie festgestellt oder mit einander gekuppelt
sind, die einzelnen Übersetzungsverhältnisse schalten lassen. Die Sonnenräder 21 und 22 haben einen gleichen Durchmesser beim bevorzugten Ausführungsbeispiel, können aber
auch unterschiedliche Durchmesser in Abhängigkeit von den
gewünschten Übersetzungsverhältnissen aufweisen.

Das erste Sonnenrad 21 kämmt mit dem ersten Satz der Umlaufräder 14 und ist undrehbar mit dem einen Ende einer Hohlwelle 23 fest verbunden, die konzentrisch über der Umlaufräderträgerwelle angeordnet ist und um diese umlaufen kann. An
dem gegenüberliegenden Ende der Hohlwelle ist eine Bremsscheibe 28 und eine Kupplungsscheibe drehfest angeordnet.
Eine Bremse B1 ist über der Bremsscheibe 28 angeordnet und
dient dazu, diese gegen Drehung festzuhalten. Das zweite
Sonnenrad 22 kämmt mit dem äußeren Zahnkranz 17 des zweiten
Satzes der Umlaufräder 15 und ist ebenfalls drehfest mit dem
einen Ende einer zweiten Hohlwelle 24 verbunden, die konzentrisch um die Hohlwelle 23 angeordnet ist und um diese
umlaufen kann. An dem Ende der zweiten Hohlwelle, und zwar dem Sonnenrad 22 abgelegen, ist eine Bremsscheibe 26 drehfest angeordnet. Die Bremsscheibe 26 wirkt mit einer Bremse
B2 zusammen und weist ein Kupplungsgehäuse 27 auf, damit die
Kupplungsscheibe 25 drehfest mit der Bremsscheibe 26 verbunden werden kann, so daß die beiden Hohlwellen 23 und 24 bzw.
die Sonnenräder 21 und 22 miteinander gekuppelt und somit
auch miteinander umlaufen können. Die Bremsen B1, B2 und die
Kupplung C1 werden dazu verwendet, um die Drehung der Sonnenräder 21 und 22 zu kontrollieren und dadurch die einzelnen Übersetzungsverhältnisse im Umlaufräderwechselgetriebe
in Abhängigkeit von ihrem ein- oder ausgerückten Zustand zu
schalten.

Wie des weiteren aus Fig. 1 der Zeichnung hervorgeht, so ist
das erste Sonnenrad 21 in einer gemeinsamen Drehebene mit
dem Ringrad 13, den Umlaufrädern 14 des ersten Satzes und
dem inneren Zahnkranz 16 des zweiten Satzes der Umlaufräder
angeordnet. Dadurch, daß diese Zahnradgruppen in der gleichen Drehebene angeordnet sind und daß sowohl die Umlaufräder 14 des ersten Satzes und die inneren Zahnkränze 16 des
zweiten Satzes mit dem Ringrad kämmen, ist es möglich, die
einzelnen Komponenten ineinander zu schachteln, wodurch der
erforderliche Bauraum für das Getriebe erheblich reduziert
wird. Das ineinander Schachteln der einzelnen Komponenten
geht im einzelnen auch aus Fig.2 hervor, die einen Schnitt
durch das Umlaufräderwechselgetriebe zeigt. In der Mitte des
Getriebes ist die als Abtriebswelle dienende Umlaufräderträgerwelle 11 erkennbar. Über die Umlaufräderträgerwelle 11
ist die erste Hohlwelle 23 geschoben, die das erste Sonnenrad 21 drehfest aufweist. Über die Hohlwelle 23 wiederum
ist die zweite Hohlwelle 24 geschoben, die ihrerseits das
zweite Sonnenrad 22 aufnimmt. Das erste oder innenliegende
Sonnenrad 21 kämmt mit den 3 Umlaufrädern des ersten Satzes
der Umlaufräder 14, die wiederum in der Innenverzahnung 13
ablaufen. Das zweite Sonnenrad 22 kämmt mit 3 äußeren Zahnkränzen der Umlaufräder 15 des zweiten Satzes, wohingegen
die innenliegenden Zahnkränze 16 dieses zweiten Satzes ebenfalls mit dem Ringrad 12 in Eingriff stehen. Das ineinander Schachteln der einzelnen Planetenkomponenten wird insbesondere dadurch erreicht, daß die Zahnkränze 16 des zweiten Satzes Umlaufräder 15 und die Umlaufräder 14 des ersten Satzes in der Innenverzahnung 13 des Ringrades 12 ablaufen.

Durch Ein- und Ausrücken der Bremsen bzw. der Kupplung kann das Umlaufräderwechselgetriebe so geschaltet werden, daß 3 verschiedene Übersetzungs- bzw. Untersetzungsverhältnisse erzielbar sind, und zwar eine direkte Übersetzung, eine erste Untersetzung und eine zweite Untersetzung von der Ringradwelle 10 zur Umlaufräderträgerwelle 11 bzw. eine direkte Übersetzung und eine erste Übersetzung und eine zweite Übersetzung von der Umlaufräderträgerwelle 11 zur Ringradwelle 10, je nachdem, wie der Kraftfluß verläuft.

Die nachfolgende Tabelle zeigt, welche Eingriffsverhältnisse bei welcher ein- und ausgerückten Bremse bzw. Kupplung bei dem vorstehend beschriebenen Getriebe bestehen und welche Elemente als Eingang oder Ausgang dienen.

| Übersetzungsverhältnis | Umlaufräderträger | Ringrad | C1 | B1 | B2 |
|---|---|---|---|---|---|
| Direkte Übersetzung $1:1$ | Eingang/Ausgang | Ausgang/Eingang | X | - | - |
| 1. Untersetzung $$\frac{R1 \times P3}{S2 \times P2 + R1 \times P3} : 1$$ | Ausgang | Eingang | - | - | X |
| 2. Untersetzung $$\frac{R1}{S1 + R1} : 1$$ | Ausgang | Eingang | - | X | - |
| 2. Übersetzung $$\frac{S1}{R1} + 1 : 1$$ | Eingang | Ausgang | - | X | - |
| 1. Übersetzung $$\frac{S2}{R1} + \frac{P2}{P3} + 1 : 1$$ | Eingang | Ausgang | - | - | X |

Wenn man zunächst auf die direkte Übersetzung blickt, so
wird diese dadurch erreicht, daß die Kupplung C1 eingerückt
wird. Bei eingerückter Kupplung C1 ist das erste Sonnenrad
21 mit dem zweiten Sonnenrad 22 verbunden, so daß beide
Sonnenräder als eine Einheit umlaufen. Dadurch, daß die
Sonnenräder miteinander gekuppelt sind, wird der Umlaufräderträger 18 dazu gezwungen, mit der gleichen Geschwindigkeit wie das Ringrad 12 umzulaufen. Die gleiche Umlaufdrehzahl von Ringrad 12 und Umlaufräderträger 18 ist das
Ergebnis davon, daß die ersten und zweiten Sätze der Umlaufräder 14 und 15 unterschiedliche Drehzahlen auf die
miteinander gekuppelten Sonnenräder übertragen wollen. Eine
Relativbewegung der einzelnen Komponenten ist dann nicht
mehr möglich, so daß die gesamten Komponenten als eine
Einheit umlaufen.

Die erste Untersetzung wird dadurch erreicht, daß die Bremse
B2 eingerückt wird. Wenn die Bremse B2 eingerückt ist, wird
das Sonnenrad 22 festgestellt, wohingegen das Sonnenrad 21
frei umlaufen kann. Eine Drehung des Ringrades 12 bewirkt,
daß die Umlaufräder 15 des zweiten Satzes um das festgestellte Sonnenrad 22 umlaufen. Die Drehung der Umlaufräder
15 des zweiten Satzes bewirkt eine Drehung des Umlaufräderträgers 18 und damit eine Drehung der Umlaufräderträgerwelle
11. Da weder die Bremse B1 noch die Kupplung C1 in diesem
Zustand eingerückt sind, kann das erste Sonnerad 21 frei
drehen unter dem Einfluß des Umlaufräderträgers 18 und des
Ringrades 12. Die Unter- bzw. Übersetzungsverhältnisse
ergeben sich aus den einzelnen Teilkreisdurchmessern, wobei
R1, P2, P3 und S2 den entsprechenden Teilkreisdurchmessern
des Ringrades 12, des inneren Zahnkranzes 16 des äußeren
Zahnkranzes 17 und dem zweiten Sonnenrad 22 entsprechen.

Die zweite Untersetzung wird dadurch erreicht, daß lediglich
die Bremse B1 eingerückt wird. Bei eingerückter Bremse B1
ist das erste Sonnenrad 21 gegen Drehung festgesetzt und ein
Umlaufen der Ringradwelle 10 sowie des zugehörigen Ringrades 12 bewirkt, daß die Umlaufräder 14 des ersten Satzes um das erste Sonnenrad 21 umlaufen, wodurch wiederum der Umlaufräderträger 18 um das erste Sonnenrad 21 umläuft, und, da die Umlaufräderträgerwelle 11 mit dem Umlaufräderträger fest verbunden ist, wird auch letztere angetrieben. In diesem Zustand ist weder die Kupplung C1 noch die Bremse B2 eingerückt und das zweite Sonnenrad 22 läuft unter dem Einfluß des Ringrades 12 und den Umlaufrädern 15 des zweiten Satzes frei um. Bei der zweiten Untersetzung entspricht S1 dem Teilkreisdurchmesser des ersten Sonnenrades 21.

Durch Umkehrung der Funktionen der Ringradwelle 10 und der Umlaufräderträgerwelle 11 ist es möglich, Übersetzungsverhältnisse zu erhalten. Diese werden wiederum dadurch erreicht, daß entweder die Bremse B1 oder B2 eingerückt wird. Eine direkte Übersetzung ist bei der Umkehrung, d.h. wenn die Umlaufräderträgerwelle 11 als Antriebswelle dient, dann erreichbar, wenn die Kupplung C1 bei ausgerückten Bremsen B1 und B2 eingerückt wird. Beim Einrücken einer der Bremsen B1 oder B2, d.h. beim festsetzen gegen Drehung, eines der beiden Sonnenräder 21 und 22, wird das Ringrad 12 über den Umlaufräderträger 18 und damit die Ringradwelle 10 angetrieben, die dann als Abtriebswelle dient.

Die vorstehende Tabelle und die Abmessungen bzw. die Größe der Durchmesser der einzelnen Planetenradkomponenten repräsentiert lediglich nur einen geringen Anwendungsbereich. Andere Kombinationen sind möglich. Gewisse Komponenten innerhalb des Umlaufräderwechselgetriebes können weiter vereinfacht oder modifiziert werden, wodurch ebenfalls die Funktion des Umlaufräderwechselgetriebes änderbar ist. Zum Beispiel kann das Getriebe dadurch vereinfacht werden, daß die Umlaufräder 15 des zweiten Satzes nicht als Doppelzahnräder ausgebildet werden, sondern als einziges Zahnrad mit einer einen gleichen Durchmesser aufweisenden Verzahnung, wobei dann lediglich der Durchmesser des zweiten Sonnenrades 22 vergrößert werden müßte um, mit dem äußeren Teil der Umlaufräder in Eingriff zu stehen.

Gleichfalls kann die Drehrichtung des Umlaufräderwechselgetriebes dadurch umgekehrt werden, daß die äußeren Zahnkränze
17 des zweiten Satzes als Umkehrräder ausgebildet werden,
die um zusätzliche Wellen an dem Umlaufräderträger 18
umlaufen und mit dem ersten Satz von Umlaufrädern und dem
zweiten Sonnenrad kämmen.

Patentansprüche

_____

1. Umlaufräderwechselgetriebe mit einer Ringradwelle (10)
   und einer Umlaufräderträgerwelle (11), wobei ein
   Ringrad (12) mit der Ringradwelle (10) konzentrisch
   verbunden ist und mit einem ersten Satz Umlaufräder
   (14) in Eingriff steht, die auf einem mit der Umlaufräderträgerwelle (11) verbundenen Umlaufräderträger
   (18) drehbar angeordnet sind und mit einem feststellbaren ersten Sonnenrad (21) kämmen, und wobei ein
   zweites feststellbares mit einem zweiten Satz Umlaufräder (15) kämmendes Sonnenrad (22) vorgesehen ist,
   dadurch gekennzeichnet, daß die beiden Sonnenräder (21,
   22) miteinander kuppelbar sind und daß der zweite Satz
   Umlaufräder (15) mit dem Ringrad (12) kämmt und auf dem
   den ersten Satz Umlaufräder (14) aufnehmenden Umlaufräderträger (18) drehbar angeordnet ist.

2. Umlaufräderwechselgetriebe nach Anspruch 1, dadurch
   gekennzeichnet, daß der zweite Satz Umlaufräder (15)
   Zahnräder mit einem inneren Zahnkranz (16), der mit dem
   Ringrad (12) kämmt, und mit einem äußeren Zahnkranz
   (17) aufweist, der mit dem zweiten Sonnenrad (22)
   kämmt, wobei beide Zahnkränze (16,17) drehfest miteinander verbunden sind.

3. Umlaufräderwechselgetriebe nach Anspruch 2, dadurch
   gekennzeichnet, daß der erste Satz Umlaufräder (14),
   das erste Sonnenrad (21) und der innere Zahnkranz (16)
   der Zahnräder des zweiten Satzes Umlaufräder (15) in
   einer gemeinsamen Ebene angeordnet sind.

4. Umlaufräderwechselgetriebe nach Anspruch 2, dadurch gekennzeichnet, daß die Sonnenräder (21, 22) denselben Teilkreisdurchmesser und die inneren Zahnkränze (16) einen kleineren Teilkreisdurchmesser als die äußeren Zahnkränze (17) aufweisen.

5. Umlaufräderwechselgetriebe nach einem oder mehreren der vorherigen Ansprüche, dadurch gekennzeichnet, daß das erste Sonnenrad (21) mit einer konzentrisch zur Umlaufräderträgerwelle (11) umlaufenden ersten Hohlwelle (23) und das zweite Sonnenrad (22) mit einer konzentrisch zur ersten Hohlwelle (23) umlaufenden zweiten Hohlwelle (24) fest verbunden ist, wobei beide Hohlwellen (23, 24) miteinander über eine Kupplung (C1) verbindbar und über je eine Bremse (B1, B2) feststellbar sind.

6. Umlaufräderwechselgetriebe nach Anspruch 3 und 5, dadurch gekennzeichnet, daß der Umlaufräderträger (18) einerseits der gemeinsamen Ebene und die Kupplung (C1) und die Bremsen (B1, B2) andererseits der gemeinsamen Ebene angeordnet sind.

Fig. 2

Fig. I